# EUROPÄISCHE PATENTSCHRIFT

(11) **EP 1 831 567 B1**
(45) Veröffentlichungstag und Bekanntmachung des Hinweises auf die Patenterteilung: **02.07.2008**
(21) Anmeldenummer: 05811078.4
(22) Anmeldetag: 02.11.2005
(51) Int. Cl.: F04B 53/14, F16J 15/32

(54) **KOLBENPUMPE**
PISTON PUMP
POMPE A PISTON

(30) Priorität: 22.12.2004 DE 102004061814
(43) Veröffentlichungstag der Anmeldung: 12.09.2007
(73) Patentinhaber: ROBERT BOSCH GMBH, 70442 Stuttgart (DE)
(72) Erfinder: ALAZE, Norbert, 71706 Markgroeningen (DE); BELING, Horst, 74189 Weinsberg (DE)
(86) Internationale Anmeldenummer: PCT/EP2005/055710
(87) Internationale Veröffentlichungsnummer: WO 2006/066996

(56) Entgegenhaltungen:
- EP-A- 1 022 468
- EP-A- 1 058 017
- EP-A- 1 082 544
- DE-A1- 3 707 913
- DE-A1- 19 752 546

## Beschreibung

### Stand der Technik

Die Erfindung geht von einer Kolbenpumpe gemäß der im Oberbegriff des Patentanspruches 1 näher definierten Art aus.

Eine derartige Kolbenpumpe ist aus der EP 1022 468A bekannt und beispielsweise Bestandteil einer Hydraulik eines elektronischen Fahrstabilitätssystems eines Kraftfahrzeuges. Die bekannte Kolbenpumpe umfasst ein Pumpengehäuse, in dem ein Pumpenkolben axial beweglich geführt ist, so dass bei einer Betätigung des Pumpenkolbens ein Fluid von einer Saugseite der Pumpe über einen an den Pumpenkolben grenzenden Pumpenraum zu einer Druckseite der Pumpe gefördert wird. Die Führung des Pumpenkolbens erfolgt durch einen Führungsring, der einstückig mit einem Kragen eines Filters ausgebildet ist. Zur Abdichtung des Kolbens ist im Bereich des Führungsrings ein Dichtring an ein Filtergerüst dieses Filters angespritzt. Ein zweiter, außen an das Filtergerüst angespritzter Dichtring dichtet das Filter gegenüber dem Pumpengehäuse ab. Beim Filtergerüst handelt es sich um ein Spritzgießteil aus Kunststoff.

Nachteilhafterweise ist ein derartiges Filter mit zusätzlich angeformten Führungsring und angespritzten Dichtringen ein relativ komplexes Bauteil, dessen Herstellung mehrere Arbeitsgänge erfordert und entsprechend teuer ist. Ein Filtergerüst aus Kunststoff kann laufzeitbedingtem Verschleiß unterliegen, kann unter Betriebsbedingungen an Elastizität verlieren und vermag daher eventuell.die für eine Dichtwirkung notwendige Vorspannung nicht dauerhaft zu halten.

Eine Kolbenpumpe mit einem Pumpengehäuse und einem axial beweglich im Pumpengehäuse geführten Kolben zur Förderung eines Fluids von einer Saugseite über einen an den Pumpenkolben grenzenden Pumpenraum zu einer Druckseite ist ferner auch aus der EP 1 082 544 A bekannt. Zur Führung und Abdichtung dieses Kolbens im Pumpengehäuse sind ein Führungsring und ein separater Dichtring in eine gemeinsame Nut des Pumpengehäuses eingebaut. Diese Kolbenpumpe hat Kostennachteile aufgrund mehrer zu verbauender Einzelteile.

Aus der EP 1058 017 A ist eine Dichtungsanordnung bekannt, umfassend einen Elastomerkörper mit einem metallischen Versteifungsring und einer angeformten Dichtlippe sowie mit einem in den Elastomerkörper eingefügten Führungsring aus Kunststoff. Wie bereits oben ausgeführt können Führungsringe aus Kunststoff unter Betriebsbedingungen verschleißen und an Elastizität verlieren.

Demgemäß ist es Aufgabe der vorliegenden Erfindung, eine Kolbenpumpe der eingangs genannten Art insbesondere im Hinblick auf vereinfachte Herstellbarkeit und geringe Montagekosten bei gleichzeitig verbesserten Dauerhaltbarkeitseigenschaften weiter zu entwickeln.

### Vorteile der Erfindung

Die erfindungsgemäße Kolbenpumpe mit den Merkmalen nach dem Patentanspruch 1 hat den Vorteil, dass in dem betreffenden, zur Führung des Kolbens in dem Gehäuse vorgesehenen Gehäusebereich nur ein einziges Bauteil montiert werden muss, um einerseits eine Führung des Kolbens in dem Gehäuse zu gewährleisten und andererseits den Führungsbereich zu dichten.

Der Dichtabschnitt, mit dem der Führungsabschnitt versehen ist, ist vorzugsweise durch einen mit einem gummielastischen Werkstoff umspritzten Bereich des Führungsrings gebildet, wobei der umspritzte Bereich einerseits an dem Pumpenkolben und andererseits an dem Pumpengehäuse anliegt. Der gummielastische Werkstoff gewährleistet eine Vorspannung des Dichtelements in Dichtrichtung, so dass die gewünschte Dichtwirkung erreicht wird. Als elastischer Werkstoff kann ein Kunststoff oder auch ein Gummi eingesetzt werden. Insbesondere kann der elastische Werkstoff aus einem gefüllten oder einem ungefüllten Polyamid oder auch aus PEEK (Polyetheretherketon) gebildet sein.

Um die Vorspannung des Dichtabschnitts in Dichtrichtung über eine lange Zeit gewährleisten zu können, ist der Führungsring aus einem Federblech gefertigt. So kann die über die Lebensdauer nachlassende Vorspannung des insbesondere durch einen gummielastischen Werkstoff gebildeten Dichtabschnitts ausgeglichen werden, da in diesem dann mindestens ein Federelement eingebettet ist.

Die Kolbenpumpe nach der Erfindung kann insbesondere als Pumpe bei einer Bremsanlage eines Kraftfahrzeuges eingesetzt werden und in diesem Falle zum Steuern des Drucks in Radbremszylindern dienen.

Beispielsweise findet die erfindungsgemäße Kolbenpumpe Anwendung bei einer Bremsanlage mit einer Radschlupfregelung, wie sie beispielsweise Teil eines Antiblockiersystems (ABS) oder einer Antischlupfregelung (AS R) ist, welche beide mit einem elektronischen Stabilitätsprogramm (ESP) verknüpft sein können. Mittels einer Radschlupfregelung kann beispielsweise bei einem Antiblockiersystem ein Blockieren der Räder des Kraftfahrzeugs bei einem Bremsvorgang und bei einer Antischlupfregelung ein Durchdrehen der angetriebenen Räder des Kraftfahrzeuges verhindert werden. Die Pumpe dient dann beispielsweise zum Rückfördern von Bremsflüssigkeit aus einem Radbremszylinder oder aus mehreren Radbremszylindern in einen Hauptbremszylinder im Falle eines Antiblockiersystems und/oder zum Fördern von Bremsflüssigkeit aus einem Vorratsbehälter in einen Radbremszylinder oder in mehrere Radbremszylinder bei einer Antischlupfregelung.

Letztere Funktion hat die Pumpe auch bei Anwendung bei einer elektrohydraulischen Bremsanlage (EHB) oder einer Fahrdynamikregelung (FDR). Bei Anwendung der Pumpe in Verbindung mit einer elektrohydraulischen Bremsanlage fördert die Pumpe Bremsflüssigkeit in den Radbremszylinder bzw. in die Radbremszylinder, wenn ein elektrischer Bremspedalsensor eine Betätigung des Bremspedals erfasst. Bei einer als Lenkhilfe dienenden Bremsanlage bzw. Fahrdynamikregelung (FDR) wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern.

Auch kann die Pumpe zum Füllen eines Speichers jeglicher Art der Bremsanlage dienen.

Bei einer vorteilhaften Ausführungsform der Kolbenpumpe gemäß der Erfindung hat der Dichtabschnitt einen im Wesentlichen U-förmigen Querschnitt, wobei einer der freien U-Schenkel des Dichtabschnitts an dem Pumpengehäuse und der andere der freien U-Schenkel an dem Pumpenkolben anliegt.

Der im Wesentlichen U-förmige Querschnitt ist bei einer speziellen Ausführungsform der erfindungsgemäßen Kolbenpumpe durch in den gummielastischen Werkstoff eingebettete, alternierend innenseitig und außenseitig angeordnete Laschen des Führungsrings vorgegeben.

Ein erfindungsgemäßer Führungsring umfasst somit eine Vielzahl von Federelementen, die im Bereich des Dichtabschnitts in dem gummielastischen Werkstoff eingebettet bzw. eingespritzt sind, so dass der gummielastische Werkstoff mit Vorspannung an die Dichtflächen gedrückt wird. Daraus resultiert sowohl bei hohen Vordrücken als auch bei Unterdruck, der während des Betriebs der Kolbenpumpe entstehen kann, eine hinreichende Dichtwirkung. Eine Leckage im Bereich des Dichtabschnitts oder auch die Gefahr eines Ansaugens von Luft entlang des Dichtabschnitts kann so vermieden werden.

Um eine verschleißfeste Führung des Pumpenkolbens zu gewährleisten, kann der Führungsring aus einem gehärteten Federblech hergestellt sein.

Bei der Montage des Führungsrings und des Pumpenkolbens in dem Pumpengehäuse werden die in dem gummielastischen Werkstoff eingespritzten Federelemente vorgespannt Der maßgenaue Führungsdurchmesser des Führungsrings ist erst nach einem Einpressen des Führungsrings in das Pumpengehäuse gegeben.

Weitere Vorteile und vorteilhafte Ausgestaltungen des Gegenstandes nach der Erfindung sind der Beschreibung, der Zeichnung und den Patentansprüchen entnehmbar.

### Zeichnung

Ein Ausführungsbeispiel einer Kolbenpumpe nach der Erfindung ist in der Zeichnung schematisch vereinfacht dargestellt und wird in der nachfolgenden Beschreibung näher erläutert. Es zeigen
Figur 1 einen vereinfachten Längsschnitt durch eine Kolbenpumpe gemäß der Erfindung;
Figur 2 den in Figur 1 gestrichelt umrandeten Bereich II in vergrößertem Maßstab; und
Figur 3 eine Draufsicht auf einen Führungsring für einen Pumpenkolben, der zur Verdeutlichung in einem Bereich ohne Kunststoffumspritzung dargestellt ist.

### Beschreibung des Ausführungsbeispiels

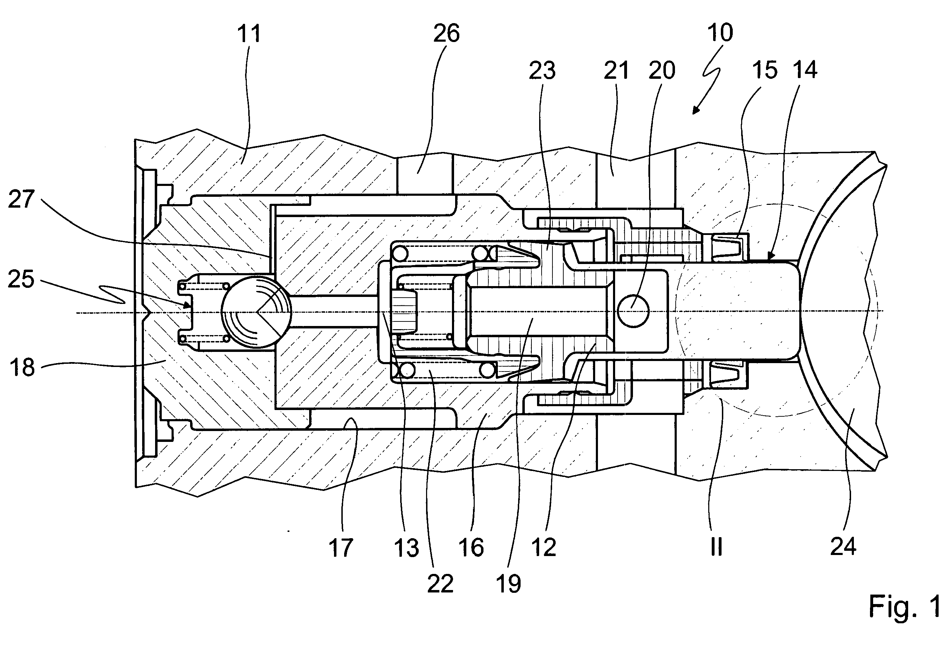

In Figur 1 ist eine Kolbenpumpe 10 dargestellt, die in einen Hydraulikblock integriert ist, welcher ein Pumpengehäuse 11 bildet. Der Hydraulikblock ist Bestandteil einer elektrohydraulischen Fahrzeugbremsanlage und umfasst neben der Kolbenpumpe gegebenenfalls weitere Kolbenpumpen gleicher Bauart sowie weitere hydraulische Bauteile wie Magnetventile oder Druckspeicher, die hydraulisch miteinander und mit der in der Zeichnung dargestellten Kolbenpumpe 10 verschaltet sein können.

Die Kolbenpumpe 10 ist mit einem mehrteilig aufgebauten Pumpenkolben 12 versehen, der an einem einem Verdrängungs- bzw. Pumpenraum 13 abgewandten Ende über einen mit einem Dichtabschnitt 15 versehenen Führungsring 14 in dem Pumpengehäuse 11 geführt ist. Ein dem Verdrängungsraum 13 zugewandtes Ende des Pumpenkolbens 12 ist über einen Ringbund 23 in einer Laufhülse 16 gedichtet geführt, die in eine Gehäusebohrung 17 eingepasst und mittels eines so genannten Auslassventildeckels 18 fixiert ist, der auch als Verschlussteil für die in den Hydraulikblock integrierte Pumpe 10 dient.

In dem Pumpenkolben 12 ist ein sacklochartiger Axialkanal 19 ausgebildet, der über Querbohrungen 20 mit einem Einlasskanal 21 verbunden ist, der eine Saugseite der Kolbenpumpe 10 bildet. Beim Ansaugen wird Fluid aus dem Einlasskanal 21 über die Querbohrungen 20 und den Axialkanal 19 in den Verdrängungsraum 13 gefördert.

Die Betätigung des Pumpenkolbens 12 erfolgt mittels eines elektromotorisch rotierend antreibbaren Exzenters 24, wobei eine Rückstellfeder 22 den Pumpenkolben 12 über den zur Führung in der Laufhülse 16 dienenden Ringbund 23 in axialer Richtung gegen den Exzenter 24 drückt. Der Exzenter 24 zwingt dem Pumpenkolben 12 eine den Pumpvorgang bewirkende hin- und hergehende Bewegung auf.

In dem Auslassventildeckel 18 ist ein als Rückschlagventil ausgebildetes Auslassventil 25 angeordnet, das einen Fluidstrom zwischen dem Verdrängungsraum 13 und einem eine Druckseite bildenden Auslasskanal 26 steuert, wobei zwischen dem Auslassventil 25 und dem Auslasskanal 26 ein Verbindungskanal 27 liegt, der an der der Laufhülse 16 zugewandten Stirnseite des Auslassventildeckels 18 in Form einer rinnenartigen Ausnehmung ausgebildet ist.

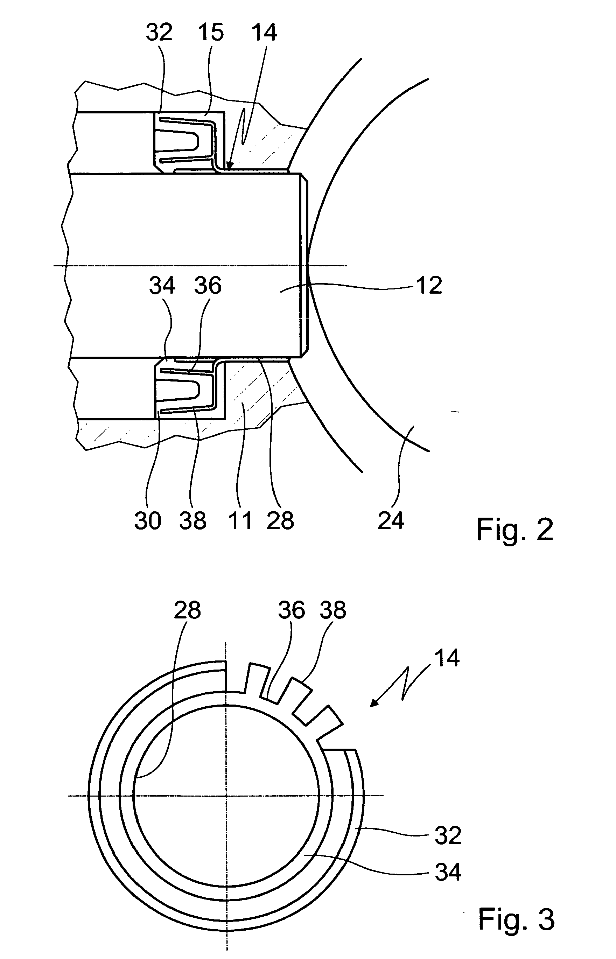

Wie insbesondere den Figuren 2 und 3 zu entnehmen ist, weist das Führungsring 14 zur Führung des Kolbens 12 in dem Gehäuse 11 einen in das Gehäuse 11 eingepressten Führungsbereich 28 auf, der aus einem gehärteten Federblech gebildet ist, das sich in den Dichtabschnitt 15 erstreckt und dort ein Einlegeteil für ein aus gefülltem Polyamid gebildetes Dichtelement 30 bildet bzw. dessen U-förmigen Querschnitt vorgibt, wobei sich ein äußerer Schenkel 32 des Dichtelements 30 an das Gehäuse 11 und ein innerer Schenkel 34 an den Kolben 12 anlegt. Der U-förmige Querschnitt des Dichtelements 30 ist durch alternierend innenseitig und außenseitig angeordnete Laschen 36 bzw. 38 des Federblechs vorgegeben. Die innenseitigen Laschen 36 bzw. die außenseitigen Laschen 38 sind durch so genannte Ausklinkungen aus dem Federblech gebildet.

## Patentansprüche

1. Kolbenpumpe, mit einem Pumpengehäuse (11), in dem ein Pumpenkolben (12) axial beweglich geführt ist, so dass bei einer Betätigung des Pumpenkolbens (12) ein Fluid von einer Saugseite (21) über einen an dem Pumpenkolben grenzenden Pumpenraum (13) zu einer Druckseite (26) gefördert wird, wobei ein Bereich zur Führung des Pumpenkolbens (12) in dem Pumpengehäuse (11) einen mit einem Dichtabschnitt (15) versehenen Führungsring (14) umfasst, **dadurch gekennzeichnet,**
**dass** der Führungsring (14) an dem Pumpengehäuse (11) fixiert ist und aus einem Federblech gefertigt ist.

2. Kolbenpumpe nach Anspruch 1, **dadurch gekennzeichnet, dass** der Dichtabschnitt (15) ein aus einem gummielastischen Werkstoff gebildetes Dichtelement (30) umfasst, der eine Umspritzung des Führungsrings (14) ist und der an dem Pumpenkolben (12) und an dem Pumpengehäuse (11) anliegt.

3. Kolbenpumpe nach einem der Ansprüche 1 oder 2, **dadurch gekennzeichnet, dass** der Dichtabschnitt (15) einen im Wesentlichen U-förmigen Querschnitt hat.

4. Kolbenpumpe nach Anspruch 3, **dadurch gekennzeichnet, dass** der im Wesentlichen U-förmige Querschnitt des Dichtabschnitts (15) durch alternierend innenseitig und außenseitig angeordnete Laschen (36,38) des Führungsrings (14) vorgegeben ist.

## Claims

1. Piston pump, with a pump casing (11) in which a pump piston (12) is guided axially movably, so that, when the pump piston (12) is actuated, a fluid is conveyed from a suction side (21) to a delivery side (26) via a pump space (13) adjacent to the pump piston, a region for guiding the pump piston (12) in the pump casing (11) comprising a guide ring (14) provided with the sealing portion (15), **characterized in that** the guide ring (14) is fixed to the pump casing (11) and is manufactured from a spring steel sheet.

2. Piston pump according to Claim 1, **characterized in that** the sealing portion (15) comprises a sealing element (30) which is formed from an elastomeric material and which is a portion injected around the guide ring (14) and bears against the pump piston (12) and against the pump casing (11).

3. Piston pump according to either one of Claims 1 and 2, **characterized in that** the sealing portion (15) has an essentially U-shaped cross section.

4. Piston pump according to Claim 3, **characterized in that** the essentially U-shaped cross section of the sealing portion (15) is predetermined by tabs (36, 38) of the guide ring (14) which are arranged alternately on the inside and on the outside.

## Revendications

1. Pompe à piston comportant un corps de pompe (11) dans lequel un piston de pompe (12) est guidé de façon mobile axialement pour que lorsque le piston de pompe (12) est actionné, du fluide passe du côté aspiration (21) vers le côté pression (26) par la chambre de pompe (13) adjacente au piston de pompe, une zone de guidage du piston de pompe (12) dans le corps de pompe (11) comprenant une bague de guidage (14) munie d'un segment d'étanchéité (15),
**caractérisée en ce que**
la bague de guidage (14) est bloquée au boîtier de pompe (11) et est fabriquée en une tôle à ressort.

2. Pompe à piston selon la revendication 1,
**caractérisée en ce que**
le segment d'étanchéité (15) comprend un élément d'étanchéité (30) réalisé en un matériau élastique comme du caoutchouc, qui est un surmoulage par injection de la bague de guidage (14) et qui s'applique contre le piston de pompe (12) et contre le boîtier de pompe (11).

3. Pompe à piston selon l'une des revendications 1 ou 2,
**caractérisée en ce que**
le segment d'étanchéité (15) a une section pratiquement en forme de U.

4. Pompe à piston selon la revendication 3,
**caractérisée en ce que**
la section essentiellement en forme de U du segment d'étanchéité (15) est prédéfinie par des pattes (36, 38) prévues en alternance sur le côté intérieur et le côté extérieur de la bague de guidage (14).
